# EUROPÄISCHE PATENTANMELDUNG

(11) **EP 1 288 638 A2**
(43) Veröffentlichungstag der Anmeldung: **05.03.2003**
(21) Anmeldenummer: 02019368.6
(22) Anmeldetag: 29.08.2002
(51) Int. Cl.: G01G 19/04

(54) **Messvorrichtung**

(30) Priorität: 04.09.2001 DE 10123461
(71) Anmelder: Pieper, Siegfried, 67549 Worms (DE)
(72) Erfinder: Pieper, Siegfried, 67549 Worms (DE)
(74) Vertreter: Sartorius, Peter, Dipl.-Ing.

(57) **Zusammenfassung**

Die Erfindung bezieht sich auf folgende Merkmale:
die Messwertaufnehmer 4a tragen über Abstützelemente oder Verbindungselemente 9 zumindest einen Biegebalken 7,
zumindest zwischen den zwei mit Abstand zueinander angeordneten Abstützelementen oder Verbindungselementen 9 ist ein Aufnahmeteil 8 vorgesehen auf dem sich das Rad 1 für die Erfassung der Radaufstandskraft abstützt und/oder abrollt, wobei zumindest vor dem Aufnahmeteil ein Überfahrteil 6 vorgesehen ist über das keine Kräfte auf die Messvorrichtung 18 eingeleitet werden.

## Beschreibung

**Die Erfindung bezieht sich auf** eine Vorrichtung zum Messen von Radaufstandskräften von gezogenen und/oder getriebenen Fahrzeugen.

**Es ist bereits** eine Vorrichtung zum Messen von Radaufstandskräften von gezogenen oder getriebenen Fahrzeugen bekannt (GB 2 315 599 A), wobei die Messvorrichtung aus einem Grundkörper zur Aufnahme von zwei mit Abstand zueinander angeordneten Messwertaufnehmern besteht, die in dem Grundkörper angeordnet sind. Oberhalb der Messdosen befindet sich ein Aufnahmeteil, das geringfügig unterhalb des Schienenkopfes angeordnet ist und über Schraubenelemente mit den beiden mit Abstand zueinander angeordneten Messdosen verbunden ist. Die Messvorrichtung ist über genaue Passstücke formschlüssig mit dem Seitenteil des Schienenkörpers verbunden. Hierzu wird die Messvorrichtung über eine Andrückvorrichtung gegen den Schienenkörper gepresst. Da das Formstück genau an die Aussparungen der Schiene angepasst ist, benötigt man für jede anders dimensionierte Schiene auch ein besonders ausgeformtes Formstück, damit eine einwandfreie Verbindung zwischen der Messvorrichtung und dem Schienenkörper hergestellt werden kann. Für den Messvorgang läuft das Rad des Fahrzeugs zuerst über die Oberfläche des Grundkörpers und dann auf das Aufnahmeteil, so dass beim ersten Kontakt des Aufnahmeteils bereits ein Messimpuls ausgelöst wird, wobei die zweite Messdose nicht auf Druck, sondern über das Schraubenelement auf Zug beansprucht wird, so dass hier ungenaue Messwerte ermittelt werden. Eine genaue Anpassung der Höhenlage des Aufnahmeteils erfolgt bei der einen Vorrichtung (Figur 6, GB 2 315 559) mittels zweier

Befestigungsschrauben. Bei dieser Vorrichtung tritt an der Messdose ein negatives Biegemoment auf. Bei längerem Einsatz verstellen sich die Schrauben, so dass keine Gewähr gegeben ist, dass der Radkranz die Oberfläche des. Aufnahmeteils berührt, da sich durch viele Überfahrten das Aufnahmeteil selbsttätig nach unten verstellen kann.

Bei der anderen Vorrichtung (Figur 3, GB 2 354 081 A) ist das Aufnahmeteil über an der Unterseite des Aufnahmeteils vorgesehene Befestigungsschrauben mit der Messdose verbunden. Eine derartige Montage ist sehr aufwendig und kompliziert. Soll beispielsweise das Aufnahmeteil in der Höhenlage verändert werden, so muss die gesamte Messvorrichtung ausgebaut werden. Beim Auffahren des Laufrads auf das Aufnahmeteil treten Biegekräfte an der Messdose auf, so dass ebenfalls keine exakte Erfassung der Aufstandskräfte der Räder möglich ist.

**Der Erfindung liegt die Aufgabe zugrunde**, die Vorrichtung zum Messen von gezogenen und/oder getriebenen Fahrzeugen derart auszubilden und anzuordnen, dass die Radaufstandskräfte während der Fahrt und auch im Ruhezustand des Fahrzeugs exakt gemessen werden können.

**Gelöst wird die Aufgabe erfindungsgemäß dadurch, dass** die Messvorrichtung einen Grundkörper zur Aufnahme von mindestens einem Messwertaufnehmer aufweist, der als Biegebalken ausgebildet ist,
der Messwertaufnehmer sich über mindesten zwei mit Abstand zueinander angeordnete Abstützelemente auf dem Grundkörper abstützt,
zumindest zwischen den zwei mit Abstand zueinander angeordneten Abstützelementen oder Verbindungselementen auf der Oberseite des Messwertaufnehmers ein Aufnahmeteil vorgesehen ist, auf dem sich das Rad für die Erfassung der Radaufstandskraft abstützt und/oder abrollt,
zumindest vor und/oder hinter dem Aufnahmeteil ein Überfahrteil vorgesehen ist, über das keine Kräfte auf die Messvorrichtung eingeleitet werden,
im Bereich der Überfahrteile sich zumindest je ein Abstützelement oder Verbindungselemente befinden.

Da in vorteilhafter Weise das Aufnahmeteil zwischen den mit zwei mit Abstand zueinander angeordneten Abstützelementen vorgesehen ist, werden die Aufstandskräfte beim Auffahren des Überfahrteils noch nicht auf die Messdose geleitet, sondern erst, wenn das Rad den mittleren Bereich des Biegebalkens erreicht hat, an dessen Enden jeweils die Abstützelemente vorgesehen sind, wobei das Aufnahmeteil, das mit dem Biegebalken verbunden ist, zwischen den beiden mit Abstand zueinander angeordneten Abstützelementen liegt.

Vorteilhaft ist es hierzu auch, dass die Abstützelemente oder Aufstandskräfte F₁, F₂ des Fahrzeugs außerhalb des Messbereichs bzw. der Messzone liegen und das Aufnahmeteil über ein oder mehrere Verbindungselemente mit dem Messwertaufnehmer verbunden ist, wobei das Aufnahmeteil in etwa der Länge des Messbereichs bzw. der Messzone entspricht und über ein oder mehrere, eine Höhenverstellung und/oder Horizontalverstellung des Aufnahmeteils zulassende Verbindungselemente mit dem Biegebalken fest und/oder lösbar verbunden ist, so dass man hierdurch eine spannungsfreie Verbindung zwischen den beiden Bauteilen, also dem Aufnahmeteil und dem Biegebalken, erhält.

Läuft also das Rad über das Aufnahmeteil, so treten keine negativen Biegekräfte sondern lediglich Druckkräfte auf, die in gleichmäßiger Weise auf den Biegebalken einwirken, so dass diese auf die Messdose ohne weiteres übertragen und somit Messfehler ausgeschaltet werden können. Durch die vorteilhafte Ausbildung des Aufnahmeteils und des Biegebalkens werden Messfehler sehr gering gehalten.

Vorteilhaft ist es auch, dass im Bereich je einer schlitzförmigen Aussparung je eine weitere Aussparung vorgesehen ist, in der je ein Überfahrteil vorgesehen ist, über das das Rad auf das Aufnahmeteil gelangt, wenn das Fahrzeug in den Messbereich bewegt wird. Durch die vorteilhafte Ausbildung der Aussparung kann sich also das Überfahrteil auf den Grundkörper abstützen, so dass bei Berühren des Überfahrteils keine Kräfte auf die Messdose ausgeübt werden. Erst wenn das Laufrad den mittleren Bereich des Aufnahmeteils erreicht hat, werden auf gleichmäßige Weise die Druckkräfte auf die Messdose weitergeleitet.

Gemäß einer bevorzugten Ausführungsform der erfindungsgemäßen Lösung ist schließlich vorgesehen, dass sich das Überfahrteil auf dem Grundkörper abstützt und mit geringfügigem Abstand zu dem Biegebalken angeordnet ist, wobei die Abstützelemente unterhalb des Überfahrteils vorgesehen sind.

Von besonderer Bedeutung ist für die vorliegende Erfindung, dass die Oberfläche des Aufnahmeteils mit geringem Abstand unterhalb der Höhe der Oberfläche eines Schienenkopfs liegt.

Im Zusammenhang mit der erfindungsgemäßen Ausbildung und Anordnung ist es von Vorteil, dass der Biegebalken eine oder mehrere Öffnungen aufweist, in die am Aufnahmeteil vorgesehene Befestigungselemente einsetzbar sind. Da der Biegebalken verschiedene Öffnungen aufweist, können die an der Unterseite des Aufnahmeteils vorgesehenen Zapfen oder Bolzen in die Öffnungen des Biegebalkens eingesetzt werden. Hierdurch erhält man eine Losverbindung.

Vorteilhaft ist es ferner, dass damit eine exakte Anpassung der Höhelage des Aufnahmeteils mit Bezug auf den Radkranz bzw. auf den Schienenkopf vorgenommen werden kann, und dass zwischen dem Aufnahmeteil und dem Biegebalken eine oder mehrere Distanzstücke einsetzbar sind.

Außerdem ist es vorteilhaft, dass zwischen zwei parallel verlaufenden Schienen eines Gleiskörpers mindestens zwei Messvorrichtungen in etwa auf einer Querebene angeordnet sind, die über sich quer zur Fahrtrichtung des zu messenden Fahrzeugs erstreckende Streben verbunden und über diese an der Schiene verklemmt sind. Hierdurch erhält man eine einwandfreie exakte Befestigung der nebeneinander liegenden Messvorrichtungen.

Ferner ist es vorteilhaft, dass die Streben als Stellschrauben oder als hydraulisch arbeitende Stellzylinder ausgebildet sind und über einen oder mehrere Anlageteile oder Anlagestellen gegen die Schiene abstützen. Da zwei oder mehrere Anlageteile an den Streben vorgesehen sind, lassen sich diese ohne weiteres an jedes beliebige Profil des Schienenkörpers anpressen, ohne dass die Dimensionierung der Schiene auf das Anlageteil einen Einfluss hat. Auf die Verwendung von Passstücken kann somit verzichtet werden, die bisher gegen das Innenprofil des Schienenkörpers gedrückt wurden und genau der Aussparung des Schienenkörpers angepasst sein mussten.

Vorteilhaft ist es ferner, dass die Streben aus zwei je eine Gewindebohrung aufweisenden Stützelementen gebildet sind, die durch eine zwei gegenläufige Gewinde aufweisende Spannschraube miteinander verbunden und verstellbar sind und an einem im Bereich der Schiene liegenden Ende ein Konus) vorgesehen ist, der in eine im Stützelement vorgesehene Bohrung einschiebbar ist, wobei das Stützelement an seiner Außenoberfläche zwei mit Abstand zueinander angeordnete Anlageteile aufweist, die sich gegen die Schiene abstützen können, wenn die Messvorrichtung an den Schienen festgesetzt werden soll. Durch die Verwendung eines Konus, der am Ende einer jeden Strebe vorgesehen ist, lässt sich ohne weiteres die Strebe von den Anlageteilen trennen, wozu lediglich der Konus aus seinem Sitz herausgeführt werden muss.

Vorteilhaft ist es ferner, dass an einem Teil der Streben mindestens eine Tragöse für die Messvorrichtung vorgesehen ist und der Biegebalken sich im Bereich seiner beiden äußeren Enden mittels eines ballig geformten Auflageteils auf dem Messwertaufnehmer abstützt. Da die Streben mit Tragösen versehen sind, lässt sich die gesamte Messvorrichtung ohne weiteres mittels eines Kranes an die gewünschte, zu messende Stelle des Schienenkörpers heranfahren und dort verklemmen.

**Weitere Vorteile und Einzelheiten der Erfindung sind in den Patentansprüchen** und in der Beschreibung erläutert und in den Figuren dargestellt. Es zeigt:
- Figur 1: eine schematische Darstellung einer als Biegebalken ausgebildeten Messdose und eines Aufnahmeteils, auf dem sich ein Laufrad mittig abstützt,
- Figur 2: eine ähnliche Darstellung wie in Figur 1 mit den einzelnen Überfahrteilen und den Befestigungselementen des als Messstrecke ausgebildeten Aufnahmeteils zum Anschluss an den Biegebalken,
- Figur 3: eine Schnittdarstellung der Messvorrichtung im Bereich der Messdose mit einem Teil einer Stützstrebe, die den Grundkörper über zwei Anlageteile gegen das Seitenteil der Schiene drückt,
- Figur 4: eine Schnittdarstellung des Überfahrteils, das sich oberhalb mit Abstand zur Messdose befindet und auf dem Grundkörper abstützt,
- Figur 5: eine Schnittdarstellung des ausgebauten Überfahrteils,
- Figur 6: eine Schnittdarstellung des Überfahrteils in der Ansicht von vorne gemäß Fig. 4 mit dem Anfahrstück und der unterhalb des Anfahrstücks vorgesehenen Messdose,
- Figur 7: eine Befestigungsvorrichtung für die beiden gegenüberliegenden Messdosen,

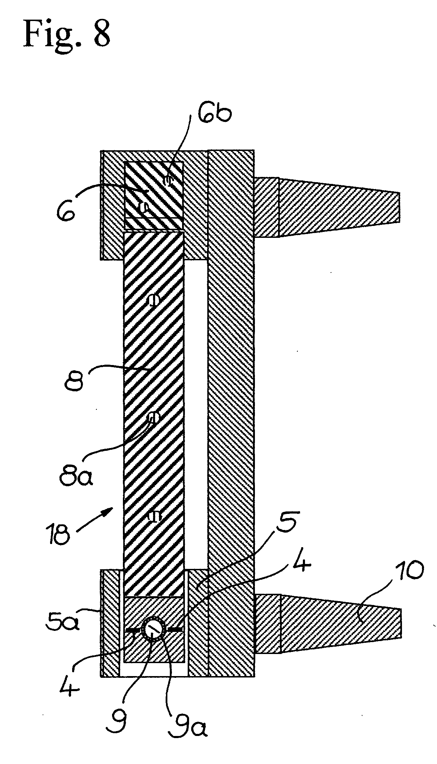

- Figur 8: eine Draufsicht der Messdose mit einem Teil der Befestigungsvorrichtung.

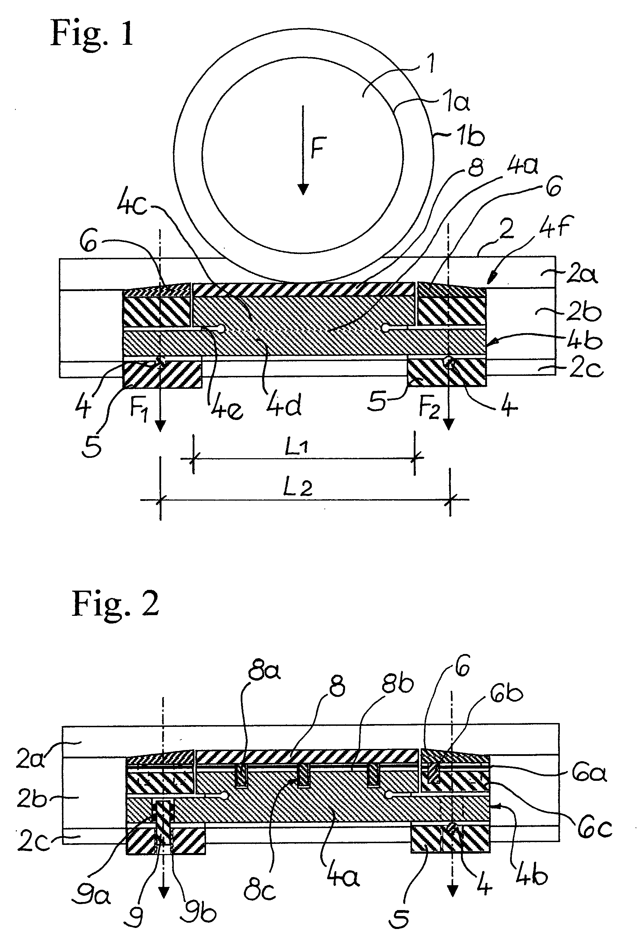

In der Zeichnung ist in Figur 1 eine Messvorrichtung allgemein mit 18 bezeichnet, die sich, wie nachdem beschrieben, aus mehreren einzelnen Komponenten zusammensetzt.

Die Messvorrichtung 18 dient zum Messen von Radaufstandskräften von gezogenen oder getriebenen Fahrzeugen, insbesondere von Schienenfahrzeugen, die über Gleiskörper bewegt werden.

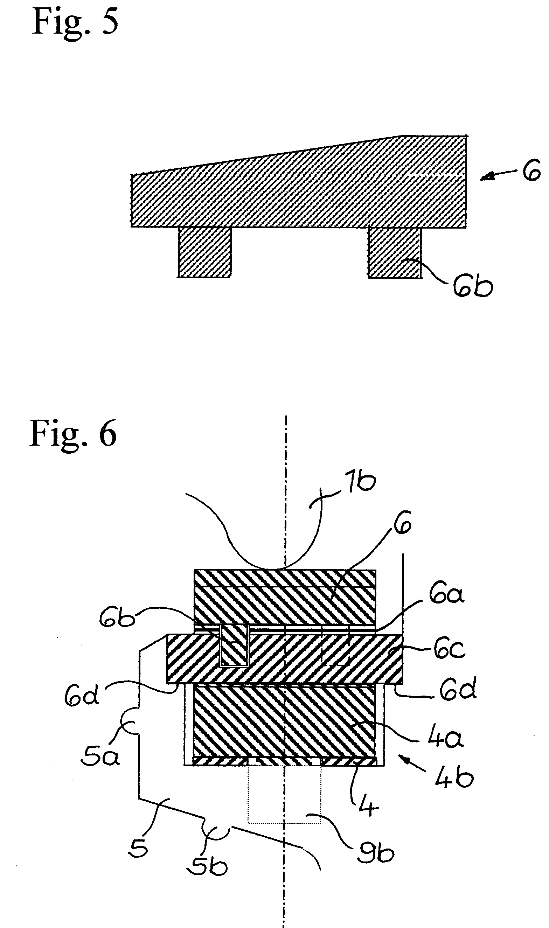

Die Messvorrichtung 18 weist einen weitgehend massiven Grundkörper 5 auf, der mit einer großen Aussparung zur Aufnahme von Messwertaufnehmern bzw. einer Messdose 4a dient, als Biegebalken ausgebildet ist und nachstehend auch so bezeichnet wird. Die Messdose bzw. der Biegebalken 4a ist in dem Grundkörper 5 in einer Ausnehmung 4b gemäß Fig.6 eingelassen.

Der Grundkörper 5 ist, insbesondere in den Figuren 1 bis 3, besonders klar herausgestellt. Im Grundkörper 5 liegt zuerst der Biegebalken 4a, der sich über Auflageteile 4 bzw. Druckstücke abstützt. Die Messdose bzw. der Biegebalken 4a ist jeweils an seinen beiden äußeren Enden außerhalb des Messbereichs abgestützt (Fig.1), wobei der Messbereich durch die gesamte Länge L₁ eines Aufnahmeteils 8 definiert wird.

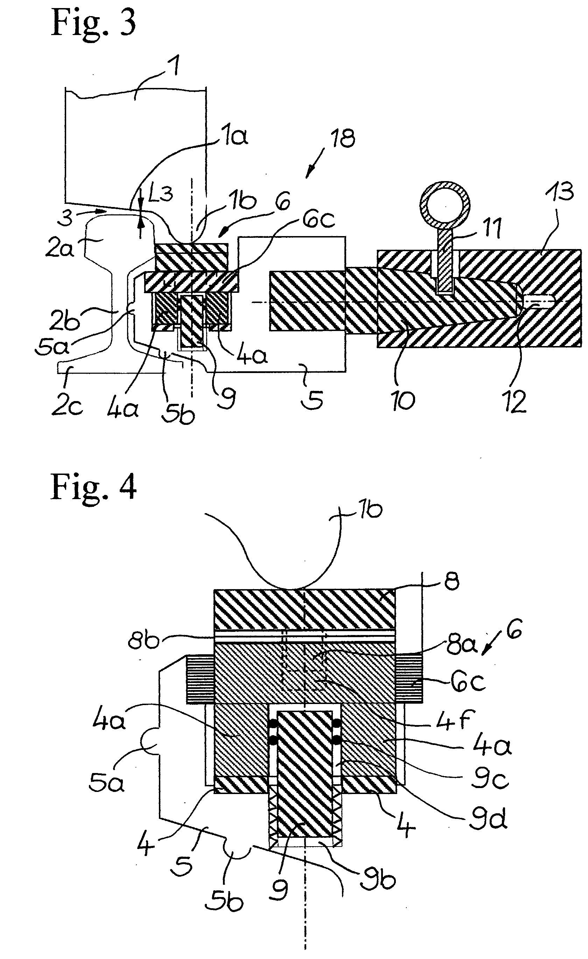

Wie aus Figur 3 und 4 hervorgeht, ist an beiden außen liegenden Enden des Biegekörpers 4a je eine Messdosenbefestigung 9a bzw. Verbindungselemente bzw. Abstützelemente oder Führungselemente 9 vorgesehen, die in entsprechende Bohrungen 9b im Grundkörper 5 eingelassen sind. Die Führungs- bzw. Verbindungs- bzw. Abstützelemente 9 erstrecken sich in eine im Biegebalken 4a vorgesehene Öffnung 9d, in der Ohrringdichtungen 9c zur elastischen Führung der Messdose bzw. des Biegebalkens 4a vorgesehen sind.

Wie aus Figur 2 bzw. aus Figur 4 hervorgeht, stützt sich der Biegebalken 4a über Auflageteile 4 auf dem Grundköper 5 ab. Aus der Zeichnung gemäß Figur 2 und 4 geht hervor, dass somit der Biegebalken 4a lediglich an seinen zwei Enden, und zwar in vorteilhafter Weise an den äußeren Enden des Biegebalkens 4a, im Grundköper 5 abgestützt ist.

Auf der Oberseite des Biegebalkens 4a befindet sich zumindestens ein Aufnahmeteil bzw. ein längliches Überfahrteil 8, das auch als Verschleißteil bezeichnet werden kann. Auf dem Aufnahmeteil 8 läuft das Rad 1 des Fahrzeugs ab, so dass die mit F gekennzeichneten Kräfte auf das Aufnahmeteil 8 (Fig.2) wirken. Das Aufnahmeteil 8 ist über ein oder mehrere Verbindungselemente 8a mit dem Biegebalken 4a lösbar und höhenbeweglich verbunden. Hierzu sind in dem Biegebalken 4a zahlreiche, mit Abstand zueinander angeordnete Öffnungen 8c vorgesehen, in die je ein Verbindungselement 8a eingesetzt werden kann, das auch als Losteil ausgebildet sein kann. Auf diese Weise ist das gesamte Aufnahmeteil 8 höhenbeweglich und lösbar mit dem Biegebalken 4a verbunden. Zwischen der Oberseite des Biegebalkens 4a und der Unterseite des Aufnahmeteils 8 können eine oder mehrere Distanzstücke 8b eingesetzt werden, damit eine genaue Anpassung der Höhenlage des Aufnahmeteils mit Bezug auf den Radkranz des Rads 1 möglich ist. Wie aus Figur 3 hervorgeht, ist das Aufnahme- oder Verschleißteil 8 so angeordnet, dass die Lauffläche 1a des Rads 1 einen geringfügigen Abstand L₃ zur Oberfläche des Schienenkopfs 2a aufweist, und alle Kräfte des Rads über den Spurkranz 1b auf die Messvorrichtung 18 bzw. den Biegebalken 4a in diesem Bereich (Fig.1) übergehen.

Eine derartige Anordnung der Messvorrichtung 18 eignet sich insbesondere für Messungen bei fahrenden Zügen, da am Schienenkörper keine Veränderungen vorgenommen zu werden brauchen. Damit die entsprechende Höhenlage 3 (L₃) des Rads 1 erreicht wird, muss das Rad über einen bestimmten Streckenbereich, hier Aufnahmeteil 8, kurzfristig angehoben werden. Hierzu sind im vorderen und hinteren Bereich des Aufnahmeteils 8 Überfahrteile 6 mit je einem als Brückenelement ausgebildeten Überfahrstück 6c vorgesehen, das sich gemäß Fig. 6 mit seinen äußeren Schenkeln auf den am Grundkörper 5 vorgesehenen Ansätzen 6d abstützt, wobei zur Veränderung der Höhenanpassung zwischen dem Überfahrstück 6c oder den Ansätzen 6d und dem Überfahrteil 6 ebenfalls Distanzstücke 6a vorgesehen werden können. Nähert sich das Rad 1 dem Überfahrteil 6, so wird es nach Passieren auf die gewünschte Höhe L₃ angehoben, wobei der Spurkranz 1b nur auf die Oberfläche des Aufnahmeteils 8 wirkt, so dass die Kräfte F₁ bzw. F₂ auf die Aufnahmeteile und somit auf die Messdosen 4a wirken können. Die Kräfte F₁, F₂ wirken im Bereich der Auflagepunkte des Auflageteils 4 außerhalb des Messbereichs (Biegebalken 4a) der Radaufstandkraft F (Fig. 1)entgegen.

Der Biegebalken 4a besteht, wie aus Figur 1 hervorgeht, aus einem Oberteil 4c zur Aufnahme des Aufnahmeteils 8 und einem Unterteil 4d, wobei zwischen Ober- und Unterteil eine oder mehrere schlitzförmige Aussparungen 4e vorgesehen sind, die insbesondere im Bereich der beiden äußeren Enden des Biegebalkens 4a angeordnet sein können. Im Bereich der beiden schlitzförmigen Aussparungen 4e befindet sich eine weitere Aussparung 4f, in die je ein Überfahrteil 6 mit Haltebolzen 6b aufgenommen ist (Fig. 5).

Wie aus Figur 5 hervorgeht, sind an der Unterseite des Überfahrteils 6 zwei mit Abstand zueinander angeordnete Haltebolzen 6b vorgesehen, die mit einem weiteren Anfahrstück bzw. Brückenteil 6c lösbar verbunden sind. Das Anfahrstück bzw. Brückenteil 6c stützt sich, wie bereits erwähnt und wie aus Figur 6 hervorgeht, endseitig in entsprechende, im Grundkörper 5 vorgesehene Ansätze 6d ab, so dass bei Überfahren des Anfahrstücks 6c mittels des Rads 1 keine Druckkräfte auf die Messdose 4a übertragen werden können. Damit wird verhindert, dass bereits beim Einfahren des Rads 1 in den Messbereich die Messdose 4a sofort anspricht. Erst wenn das Rad 1 das Überfahrteil 6 etwas überfahren und das mittlere Aufnahmeteil 8 in etwa erreicht hat, können die von dem Rad ausgehenden Drücke F bzw. F₁ und F₂ auf die Messdose 4a einwirken. Hierdurch ist eine exakte Erfassung der Aufstandskraft F des Rads 1 möglich. Die Enden des Biegebalkens 4a sind deshalb, wie bereits erwähnt, unterhalb der Überfahrteile 6 vorgesehen.

Wie aus Figur 1 hervorgeht, weist die Messstrecke bzw. das Aufnahmeteil 8 auf dem Biegebalken 4a eine Länge L₁ auf, die kleiner ist als der Abstand L₂ zwischen den beiden in die Messdose 4a eingeleiteten Kräften F₁ und F2.

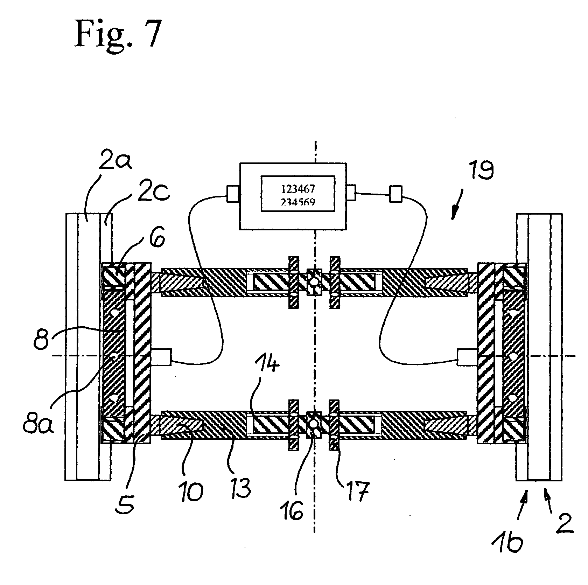

Figur 7 zeigt zwei auf einer gleichen Querebene angeordnete Messvorrichtungen 18, die über eine Befestigungsvorrichtung 19 bzw. Streben an den beiden parallel verlaufenden Schienen verklemmt werden können. Die Befestigungsvorrichtung 19 kann auch als hydraulische Einrichtung ausgebildet sein und Hydraulikzylinder oder andere elektrische Stellmotoren aufweisen, mittels derer die Grundkörper 5 an den Schienen verklemmt werden können.

Die Befestigungsvorrichtung 19 besteht hier aus Streben, die sich über einen oder mehrere Anlageteile oder Anlagepunkte 5a bzw. 5b gegen den Schienensteg 2b und den Schienenfuß 2c anlegen. Auf diese Weise können die Anlageteile ohne weiteres gegen jeden beliebigen, unterschiedlich ausgebildeten Schienenkörper angepresst werden.

Am Grundkörper 5 ist gemäß Figur 3 ein Konus 10 befestigt, der sich in eine in einem Stützelement 13 vorgesehene Öffnung erstreckt und dort verklemmt werden kann. Soll der Konus 10 wieder gelöst werden, so wird in eine entsprechende, am Ende des Konus vorgesehene Öffnung 12 ein in der Zeichnung nicht dargestellter Keil eingeschlagen.

Die beiden Streben 13 sind gemäß Figur 4 endseitig mit je einer Gewindebohrung 14 (Fig.7) zur Aufnahme einer Spannschraube 16 versehen, die mit gegenläufigem Gewinde ausgestattet ist, so dass durch Drehen nach rechts oder links, die beiden Stützelemente 13 auseinander oder aufeinander zu bewegt werden. Die Spannschraube 16 ist an der Strebe 13 mittels einer Kontermutter 17 gesichert. Mittels der beiden parallel verlaufenden Streben 13 gemäß Figur 7 lassen sich die beiden auf einer Querebene angeordneten Messvorrichtungen 18 gegen die Schienenkörper verklemmen. Damit eine leichtere Montage der gesamten Messvorrichtung möglich ist, weist jede Strebe 13 eine Tragöse 11 für die Messvorrichtung auf. Die Öse 11 ist im Ausführungsbeispiel gemäß Figur 3 in den Konus 10 eingeschraubt.

In Figur 1 ist ein Ausführungsbeispiel dargestellt, bei dem das Laufrad 1 gemäß Figur 3 geringfügig angehoben wird, wobei die Lauffläche 1a dann einen geringfügigen Abstand L₃ aufweist. Diese Messvorrichtung eignet sich, wie bereits erwähnt, insbesondere für durchfahrende Schienenfahrzeuge. Es ist jedoch auch möglich, die Messvorrichtung im stationären Bereich einzusetzen. Hierzu wird die Oberfläche des Aufnahmeteils 8 weiter nach unten abgesenkt und die bisherigen Überfahrstücke 6c durch andere Überfahrstücke 6c ersetzt, so dass sie nun in Richtung des Aufnahmeteils 8 geneigt verlaufen. Hierzu muss der Schienenkopf 2a geringfügig abgefräst werden, damit die Lauffläche 1a mit dem Schienenkopf 2a keinen Kontakt aufnehmen kann. Um also im stationären Bereich zu messen, werden die Überfahrstücke 6c entsprechend ersetzt und die Oberfläche bzw. das Aufnahmeteil 8 weiter heruntergelassen, wobei die Distanzstücke 8b entfernt werden müssen.

Mit dieser Vorrichtung ist es möglich, statische oder dynamische Kräfte sowie Gewichte und Fahrtlasten von Rädern oder Achsen bzw. Drehgestellen von Gleisfahrzeugen ohne weiteres zu messen. Durch die vorteilhafte Ausbildung der Klemmvorrichtung 19 mit den Streben 13 können die einzelnen Messvorrichtungen 18 an jede beliebige Spurbreite angepasst werden. Zur Messung kann also das Rad entweder, wie im beschriebenen Ausführungsbeispiel, angehoben oder auch abgesenkt werden. Beide Messungen sind ohne weiteres mit der beschriebenen Vorrichtung möglich. In vorteilhafter Weise können die einzelnen Messvorrichtungen im Verbund angeordnet sein, so dass ein sehr exaktes Messergebnis erzielt wird. Die über die Messdosen 4a erfassten Messgrößen werden dazu in optische oder elektronische Signale umgewandelt und entsprechend ausgewertet. Mittels der einzelnen Anlageteile 5a, 5b, die an der Außenseite des Grundkörpers 5 vorgesehen sind, ist eine einfache Anpassung an jeden beliebigen Schienenkörper möglich.

### Bezugszeichenliste

- 1: Rad
- 1a: Lauffläche
- 1b: Spurkranz
- 2: Schiene
- 2a: Schienenkopf
- 2b: Schienensteg
- 2c: Schienenfuß
- 3: Höhenlage L₃
- 4: Auflageteil
- 4a: Messwertaufnehmer, Messdose, Biegebalken
- 4b: Ausnehmung der Messdose
- 4c: Oberteil des Biegebalkens
- 4d: Unterteil des Biegebalkens
- 4e: schlitzförmige Aussparung
- 4f: weitere Aussparung für Überfahrteil 6
- 5: Grundkörper
- 5a: Anlageteil
- 5b: Anlageteil
- 6: Überfahrteil
- 6a: Distanzstück
- 6b: Haltbolzen
- 6c: Anfahr- bzw. Überfahrstück, Brückenteil
- 6d: Ansatz
- 8: Aufnahmeteil, Verschleißteil
- 8a: Verbindungselement, Bolzen als Losteil ausgebildeter Haltebolzen
- 8b: Distanzstück
- 8c: Bohrung, Öffnung
- 9: Verbindungselement, Abstützelement,
- 9a: Messdosenbefestigung
- 9b: Bohrung
- 9c: Ohrringdichtung
- 9d: Öffnung
- 10: Konusteil
- 11: Tragöse für Messvorrichtung
- 12: Öffnung
- 13: Stützelement, Strebe
- 13a: Bohrung
- 14: Gewindebohrung
- 16: Spannschraube
- 17: Kontermutter
- 18: Messvorrichtung
- 19: Befestigungsvorrichtung, Strebe, Hydraulikzylinder, Klemmvorrichtung

## Patentansprüche

1. Vorrichtung zum Messen von Radaufstandkräften von gezogenen und/oder getriebenen Fahrzeugen oder von Gleisfahrzeugen, **gekennzeichnet durch folgende Merkmale:**
1.1 eine Messvorrichtung (18) weist einen Grundkörper (5) zur Aufnahme von mindestens einem Messwertaufnehmer (4a) auf, der als Biegebalken ausgebildet ist,
1.2 der Messwertaufnehmer (4a) stützt sich über mindesten zwei mit Abstand zueinander angeordnete Abstützelemente auf dem Grundkörper (5) ab,
1.3 zumindest zwischen zwei mit Abstand zueinander angeordneten Abstützelementen oder Verbindungselementen (9) ist auf der Oberseite des Messwertaufnehmers (4a) ein Aufnahmeteil (8) vorgesehen, auf dem sich ein Rad (1) für die Erfassung der Radaufstandskraft abstützt und/oder abrollt,
1.4 zumindest vor und/oder hinter dem Aufnahmeteil (8) ist ein Überfahrteil (6) vorgesehen, über das keine Kräfte auf die Messvorrichtung eingeleitet werden,
1.5 im Bereich der Überfahrteile (6) befinden sich zumindest je ein Abstützelement oder Verbindungselemente (9).

2. Vorrichtung nach Anspruch 1, **dadurch gekennzeichnet, dass** die Abstützelemente (9) oder Aufstandskräfte F₁, F₂ des Fahrzeugs außerhalb des Messbereichs bzw. der Messzone liegen.

3. Vorrichtung nach Anspruch 1, **dadurch gekennzeichnet, dass** das Aufnahmeteil (8) über ein oder mehrere Verbindungselemente (8a) mit dem Messwertaufnehmer (4a) verbunden sind, wobei das Aufnahmeteil (8) in etwa der Länge des Messbereichs bzw. der Messzone entspricht.

4. Vorrichtung nach Anspruch 1 oder 2, **dadurch gekennzeichnet, dass** das Aufnahmeteil (8) über ein oder mehrere, eine Höhenverstellung und/oder Horizontalverstellung des Aufnahmeteils (8) zulassende Verbindungselemente (8a) mit dem Biegebalken (4a) fest und/oder lösbar verbunden ist.

5. Vorrichtung nach einem der vorhergehenden Ansprüche, **dadurch gekennzeichnet, dass** der Biegebalken (4a) aus einem Oberteil (4c) zur Aufnahme des Aufnahmeteils (8) und aus einem Unterteil (4d) gebildet ist, die fest oder einteilig miteinander verbunden sind, wobei zwischen Ober- und Unterteil eine oder mehrere schlitzförmige Aussparungen (4e) vorgesehen sind.

6. Vorrichtung nach einem der vorhergehenden Ansprüche, **dadurch gekennzeichnet, dass** im Bereich je einer schlitzförmigen Aussparung (4e) je eine weitere Aussparung (4f) vorgesehen ist, in der je ein Überfahrteil (6) vorgesehen ist, über das das Rad (1) auf das Aufnahmeteil (8) gelangt, wenn das Fahrzeug in den Messbereich bewegt wird.

7. Vorrichtung nach einem der vorhergehenden Ansprüche, **dadurch gekennzeichnet, dass** sich das Überfahrteil (6) auf dem Grundkörper (5) abstützt und mit geringfügigem Abstand zu dem Biegebalken (4a) angeordnet ist, wobei die Abstützelemente (9) unterhalb des Überfahrteils (6) vorgesehen sind.

8. Vorrichtung nach einem der vorhergehenden Ansprüche, **dadurch gekennzeichnet, dass** die Oberfläche des Aufnahmeteils (8) mit geringem Abstand unterhalb der Höhe der Oberfläche eines Schienenkopfs (2a) liegt.

9. Vorrichtung nach einem der vorhergehenden Ansprüche, **dadurch gekennzeichnet, dass** das Höhenniveau der Lauffläche des Rads (1) auf dem gleichen Höhenniveau wie der Schienenkopf (2a) liegt.

10. Vorrichtung nach einem der vorhergehenden Ansprüche, **dadurch gekennzeichnet, dass** das Höhenniveau der Lauffläche des Rads (1) etwas höher liegt als das Höhenniveau des Schienenkopfs (2a).

11. Vorrichtung nach einem der vorhergehenden Ansprüche, **dadurch gekennzeichnet, dass** der Biegebalken (4a) eine oder mehrere Öffnungen (8c) aufweist, in die am Aufnahmeteil (8) vorgesehene Befestigungselemente (8a) einsetzbar sind.

12. Vorrichtung nach einem der vorhergehenden Ansprüche, **dadurch gekennzeichnet, dass** zwischen dem Aufnahmeteil (8) und dem Biegebalken (4a) eine oder mehrere Distanzstücke (8b) einsetzbar sind.

13. Vorrichtung nach einem der vorhergehenden Ansprüche, **dadurch gekennzeichnet, dass** zwischen zwei parallel verlaufenden Schienen (2) eines Gleiskörpers mindestens zwei Messvorrichtungen (18) in etwa auf einer Querebene angeordnet sind, die über sich quer zur Fahrtrichtung des zu messenden Fahrzeugs erstreckende Streben (19) verbunden und über diese an der Schiene (2) verklemmt sind.

14. Vorrichtung nach einem der vorhergehenden Ansprüche, **dadurch gekennzeichnet, dass** die Streben (19) als Stellschrauben oder als hydraulisch arbeitende Stellzylinder ausgebildet sind und über einen oder mehrere Anlageteile oder Anlagestellen (5a, 5b) gegen die Schiene (2) abstützen.

15. Vorrichtung nach einem der vorhergehenden Ansprüche, **dadurch gekennzeichnet, dass** die Streben (19) aus zwei je eine Gewindebohrung aufweisenden Stützelementen (13) gebildet sind, die durch eine zwei gegenläufige Gewinde aufweisende Spannschraube (16) miteinander verbunden und verstellbar sind.

16. Vorrichtung nach einem der vorhergehenden Ansprüche, **dadurch gekennzeichnet, dass** an einem im Bereich der Schiene liegenden Ende ein Konus (10) vorgesehen ist, der in eine im Stützelement (13) vorgesehene Bohrung (13a) einschiebbar ist, wobei das Stützelement (13) an seiner Außenoberfläche zwei mit Abstand zueinander angeordnete Anlageteile (5a, 5b) aufweist, die sich gegen die Schiene (2) abstützen können, wenn die Messvorrichtung (18) an den Schienen festgesetzt werden soll.
